# EUROPEAN PATENT APPLICATION

(11) **EP 4 507 285 A1**
(43) Date of publication of application: **12.02.2025**
(21) Application number: 23778461.6
(22) Date of filing: 31.03.2023
(51) Int. Cl.: H04M 1/7243, H04L 51/04

(54) **MESSAGE OUTPUT METHOD AND APPARATUS, AND ELECTRONIC DEVICE**

(30) Priority: 02.04.2022 CN 202210351311
(71) Applicant: Vivo Mobile Communication Co., Ltd., Dongguan, Guangdong 523863 (CN)
(72) Inventor: LIU, Yiming, Dongguan, Guangdong 523863 (CN)
(74) Representative: Murgitroyd & Company
(86) International application number: PCT/CN2023/085488
(87) International publication number: WO 2023/186097

(57) **Abstract**

This application discloses a message output method and apparatus, and an electronic device, and pertains to the field of communication technologies. The method includes: A first electronic device obtains first emotion information, where the first emotion information indicates an emotion of a user of the first electronic device; and the first electronic device outputs at least a part of content in a first message based on the first emotion information.

## Description

### CROSS-REFERENCE TO RELATED APPLICATIONS

This application claims priority to Chinese Patent Application No. 202210351311.7, filed in China on April 2, 2022, which is incorporated herein by reference in its entirety.

### TECHNICAL FIELD

This application pertains to the field of communication technologies, and specifically relates to a message output method and apparatus, and an electronic device.

### BACKGROUND

With development of communication technologies, functions of electronic devices become increasingly diverse. For example, an electronic device may receive and output a voice message.

Specifically, in a related technology, after the electronic device receives the voice message, a user may perform an input in the electronic device, to trigger the electronic device: to input a tone of the voice message as a user of a sending end device and play content of the voice message; or to convert the voice message into a text message, and display a corresponding text in a default font.

However, according to the foregoing method, the electronic device can only input the tone of the voice message as the user of the sending end device and play the content of the voice message; or convert the voice message into the text message and display the corresponding text in the default font, so that a manner in which the electronic device outputs the message is relatively fixed.

### SUMMARY

An objective of the embodiments of this application is to provide a message output method and apparatus, and an electronic device, to resolve a problem that a message output manner in the prior art is relatively fixed.

According to a first aspect, an embodiment of this application provides a message output method. The method includes: A first electronic device obtains first emotion information, where the first emotion information indicates an emotion of a user of the first electronic device; and the first electronic device outputs at least a part of content in a first message based on the first emotion information.

According to a second aspect, an embodiment of this application provides a message output method. The method includes: In a case that a target message is displayed, a second electronic device receives a target input performed by a user on the target message; in response to the target input, the second electronic device obtains a first message, and associates the first message with the target message; and the second electronic device sends the first message to a first electronic device. In a case that the first message is associated with the target message, the target message is used by the first electronic device to output the first message based on first emotion information, where the first emotion information is emotion information obtained when the first electronic device outputs the target message, and the first emotion information indicates an emotion of a user of the first electronic device.

According to a third aspect, an embodiment of this application provides a message output apparatus. The apparatus includes: an obtaining module and an output module, where the obtaining module is configured to obtain first emotion information, where the first emotion information indicates an emotion of a user of a first electronic device; and the output module is configured to output at least a part of content in a first message based on the first emotion information obtained by the obtaining module.

According to a fourth aspect, an embodiment of this application provides a message output apparatus. The apparatus includes: a receiving module, a display module, a processing module, and a sending module, where the receiving module is configured to: in a case that the display module displays a target message, receive a target input performed by a user on the target message; the processing module is configured to: in response to the target input received by the receiving module, obtain a first message, and associate the first message with the target message; and the sending module is configured to send the first message to a first electronic device. In a case that the first message is associated with the target message, the target message is used by the first electronic device to output the first message based on first emotion information, where the first emotion information is emotion information obtained when the first electronic device outputs the target message, and the first emotion information indicates an emotion of a user of the first electronic device.

According to a fifth aspect, an embodiment of this application provides an electronic device, where the electronic device includes a processor, a memory, and a program or an instruction that is stored in the memory and that is executable on the processor, and when the program or the instruction is executed by the processor, the steps of the method according to the first aspect or the second aspect are implemented.

According to a sixth aspect, an embodiment of this application provides a readable storage medium, where the readable storage medium stores a program or an instruction, and when the program or the instruction is executed by a processor, the steps of the method according to the first aspect or the second aspect are implemented.

According to a seventh aspect, an embodiment of this application provides a chip, where the chip includes a processor and a communication interface, the communication interface is coupled to the processor, and the processor is configured to run a program or an instruction, to implement the method according to the first aspect or the second aspect.

According to an eighth aspect, an embodiment of this application provides a computer program product, where the program product is stored in a storage medium, and the program product is executed by at least one processor to implement the method according to the first aspect or the second aspect.

In the embodiments of this application, the first electronic device may obtain the first emotion information, where the first emotion information indicates the emotion of the user of the first electronic device; and the first electronic device may output at least the part of the content in the first message based on the first emotion information. In this solution, after obtaining the first emotion information that is used to indicate the emotion of the user of the first electronic device, the first electronic device may output at least the part of the content in the first message based on the first emotion information, instead of outputting the first message in a default manner. Therefore, flexibility of a message output manner may be improved.

### BRIEF DESCRIPTION OF DRAWINGS

FIG. 1 is a first flowchart of a message output method according to an embodiment of this application;
FIG. 2 is a second flowchart of a message output method according to an embodiment of this application;
FIG. 3 is a first schematic diagram of an application interface of a message output method according to an embodiment of this application;
FIG. 4 is a second schematic diagram of an application interface of a message output method according to an embodiment of this application;
FIG. 5 is a first schematic diagram of a message output apparatus according to an embodiment of this application;
FIG. 6 is a second schematic diagram of a message output apparatus according to an embodiment of this application;
FIG. 7 is a schematic diagram of an electronic device according to an embodiment of this application; and
FIG. 8 is a schematic diagram of hardware of an electronic device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. Based on the embodiments of this application, all other embodiments obtained by a person of ordinary skill in the art shall fall within the protection scope of this application.

The terms "first", "second", and the like in this specification and claims of this application are used to distinguish between similar objects instead of describing a specific order or sequence. It should be understood that the terms used in such a way may be interchangeable in proper circumstances, so that the embodiments of this application can be implemented in an order other than the order illustrated or described herein. Objects classified by "first", "second", and the like are usually of a same type, and a quantity of objects is not limited. For example, there may be one or more first objects. In addition, in this specification and the claims, "and/or" indicates at least one of connected objects, and a character "/" generally indicates an "or" relationship between associated objects.

It should be noted that the identifier in the embodiments of this application is used to indicate a text, a symbol, an image, and the like of information. A control or another container may be used as a carrier for displaying the information, including but not limited to a text identifier, a symbol identifier, and an image identifier.

The following describes in detail a message output method and apparatus, and an electronic device provided in the embodiments of this application through specific embodiments and application scenarios thereof with reference to the accompanying drawings.

The message output method provided in the embodiments of this application may be applied to a message output scenario.

For example, when a user needs an electronic device to output content of a message (for example, the first message in this embodiment) based on a current emotion of the user, the electronic device may first obtain emotion information that is used to indicate the emotion of the user of the first electronic device, and then output at least a part of content of the first message based on the emotion information. In this way, the electronic device outputs content of the first message not in a default manner. Therefore, flexibility of message output may be improved.

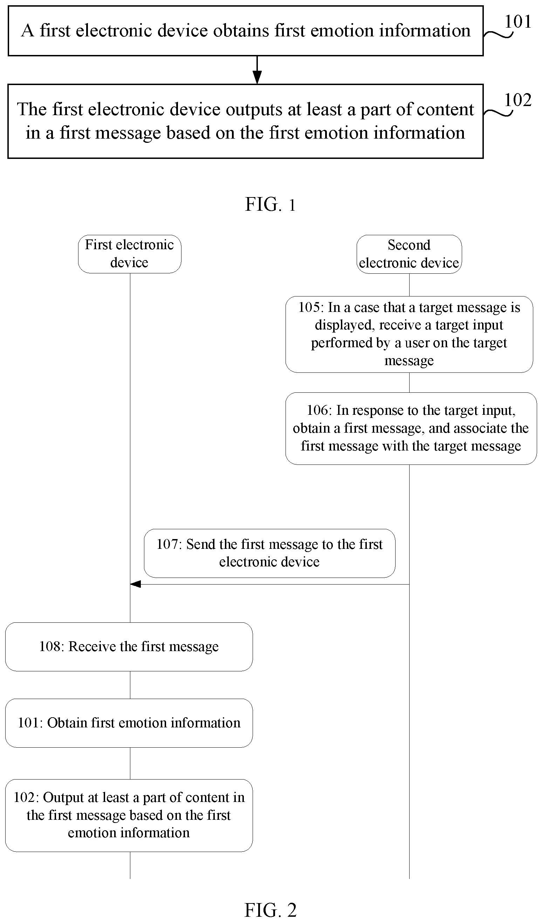

An embodiment of this application provides a message output method. FIG. 1 is a schematic flowchart of a message output method according to an embodiment of this application. As shown in FIG. 1, the message output method provided in this embodiment of this application may include the following steps 101 to 102.

Step 101: A first electronic device obtains first emotion information.

The first emotion information may indicate an emotion of a user of the first electronic device.

Optionally, in this embodiment of this application, the emotion of the user may be any possible emotion such as pleasure, excitement, anger, or grief.

Optionally, in this embodiment of this application, the user of the first electronic device may be a host user or a non-host user of the first electronic device. It may be understood that a user who currently uses the first electronic device is the user of the first electronic device. This may be specifically determined according to an actual use requirement, and is not limited in this embodiment of this application.

For ease of description, the user of the first electronic device is referred to as a first user below. It may be understood that meanings of "the user of the first electronic device" and "the first user" are the same, and may be interchanged.

In this embodiment of this application, after obtaining the first emotion information, the first electronic device may output a first message based on the first emotion information. For a specific description of the first message, refer to a related description of the first message in the following step 102. To avoid repetition, details are not described herein again.

Optionally, in this embodiment of this application, the first message may be a message that is not read or already read and that is in any application of the first electronic device.

For example, the first message may be a session message that is received but not read by an instant messaging application of the first electronic device.

For another example, the first message may be a session message that is sent by an instant messaging application of the first electronic device.

Optionally, in this embodiment of this application, a session interface of the session message may be a session interface of a contact, or may be a session interface of a group. This may be specifically determined according to an actual use requirement, and is not limited in this embodiment of this application.

Optionally, in this embodiment of this application, there may be one or more first messages. This may be specifically determined according to an actual use requirement, and is not limited in this embodiment of this application.

Optionally, in this embodiment of this application, a type of the first message may be a voice type, a text type, a video type, an image type, or the like. This may be specifically determined according to an actual use requirement, and is not limited in this embodiment of this application.

Optionally, in this embodiment of this application, the first electronic device may obtain the first emotion information via a sensor such as a camera or a microphone. This may be specifically determined according to an actual use requirement, and is not limited in this embodiment of this application.

For example, the first electronic device may detect a user expression of the first electronic device by using an eye tracking technology via the camera, to obtain emotion information of the user of the first electronic device. Alternatively, the first electronic device may obtain, via the microphone, sound emitted by the user of the first electronic device, and obtain emotion information of the user of the first electronic device by using a speech recognition technology.

It should be noted that, in this embodiment of this application, any method for obtaining the first emotion information falls within the protection scope of this application.

Optionally, in this embodiment of this application, in a manner 1, the first electronic device may obtain the first emotion information based on an input of the first user. For example, after receiving an input performed by the first user on a control that is displayed on the first electronic device and that is used for obtaining emotion information or receiving an input of an identifier indicating one message (for example, the first message below), the first electronic device may obtain the first emotion information. Alternatively, in a manner 2, in a process of outputting a target message, the first electronic device obtains the first emotion information. This may be specifically determined according to an actual use requirement, and is not limited in this embodiment of this application.

Optionally, in this embodiment of this application, in the manner 2, the foregoing step 101 may be specifically implemented by using the following step 101a.

Step 101a: In the process of outputting the target message, the first electronic device obtains the first emotion information.

The target message may be associated with the first message.

In this embodiment of this application, an output time of the first message may be later than an output time of the target message.

Optionally, in this embodiment of this application, the target message may be a message that is sent or received by the first electronic device.

Optionally, in this embodiment of this application, the target message may be a voice message, a text message, a video message, an image message, or the like. This may be specifically determined according to an actual use requirement, and is not limited in this embodiment of this application.

In this embodiment of this application, that the target message may be associated with the first message may be understood as follows: An identifier of the target message is associated with an identifier of the first message. For example, a packet name of the target message is associated with a packet name of the first message.

It should be noted that, in this embodiment of this application, if one message is associated with another message, when the first electronic device outputs the one message, the first electronic device may start to obtain the emotion information (for example, the first emotion information above) of the user who currently uses the first electronic device, and then the first electronic device may output at least a part of content in the another message (for example, the first message) based on the obtained first emotion information.

In this embodiment of this application, the first message and the target message are messages for communication between the first electronic device and a second electronic device.

Optionally, in this embodiment of this application, the first electronic device may associate the target message with the first message, or the second electronic device may associate the first message with the target message. This may be specifically determined according to an actual use requirement, and is not limited in this embodiment of this application.

In this embodiment of this application, in the process of outputting the target message associated with the first message, the first electronic device may obtain the first emotion information of the first user, and output at least a part of content in the first message based on the first emotion information. Therefore, the first electronic device may have sufficient time to obtain and verify the emotion information of the first user, thereby improving accuracy of the first emotion information. In addition, in comparison with a solution in which the emotion information of the first user starts to be obtained again when the first message needs to be output, obtaining the emotion information of the first user in advance may shorten an output delay of the first message, thereby improving user experience. Moreover, the first electronic device does not need to always obtain the emotion information of the first user, thereby saving resources.

Step 102: The first electronic device outputs at least the part of the content in the first message based on the first emotion information.

For specific descriptions of the first emotion information and the first message, refer to the related description in the foregoing step 101. To avoid repetition, details are not described herein again.

Optionally, in this embodiment of this application, an output form of at least the part of the content that is of the first message and that is output by the first electronic device is related to the type of the first message.

For example, if the first message is a text message, the first electronic device may output at least the part of the content in the first message in a text form or a voice form.

For another example, if the first message is a voice message, the first electronic device may output at least the part of the content in the first message in a text form or a voice form.

Optionally, in this embodiment of this application, the first electronic device may output at least the part of the content in the first message when triggered by the user, or may automatically output at least the part of the content in the first message. This may be specifically determined according to an actual use requirement, and is not limited in this embodiment of this application.

Optionally, in this embodiment of this application, the first message may include at least one piece of first content, each piece of first content is associated with one piece of emotion information, and the one piece of emotion information indicates one emotion. The foregoing step 102 may be specifically implemented by using the following step 102a or 102b.

Step 102a: In a case that emotion information associated with second content in the at least one piece of first content matches the first emotion information, the first electronic device outputs the second content.

In this embodiment of this application, different emotion information associated with the first content indicates different emotions.

Optionally, in this embodiment of this application, emotion information associated with different pieces of first content may be different or may be the same. This may be specifically determined according to an actual use requirement, and is not limited in this embodiment of this application.

Optionally, in this embodiment of this application, when a plurality of pieces of first content are associated with same emotion information, the plurality of pieces of first content may be consecutive in terms of content.

Optionally, in this embodiment of this application, each piece of first content may be voice content, text content, video content, image content, or the like. This may be specifically determined according to an actual use requirement, and is not limited in this embodiment of this application.

Optionally, in this embodiment of this application, there may be one or more pieces of first content. This may be specifically determined based on a quantity of pieces of first content, in the at least one piece of first content, in which emotion information matches the first emotion information.

For example, the first message includes three pieces of first content (first content A, first content B, and first content C), where an emotion indicated by emotion information associated with the first content A is pleasure, an emotion indicated by emotion information associated with the first content B is anger, and an emotion indicated by emotion information associated with the first content C is grief. In this case, when an emotion indicated by the first emotion information obtained by the first electronic device is pleasure, the first electronic device may determine that the first content A matches the first emotion information, so that the first electronic device outputs the first content A.

Optionally, in this embodiment of this application, when the first message is a voice message, tones of the first content associated with the different emotion information are different.

Further, content of the first content associated with the different emotion information may be the same or different.

For example, the first message may include one piece of first content (content 1) recorded in a grief tone and one piece of first content (content 2) recorded in a pleasure tone, where content of the content 1 is the same as content of the content 2.

Step 102b: In a case that emotion information associated with each piece of first content in the at least one piece of first content does not match the first emotion information, the first electronic device outputs at least a part of content in the at least one piece of first content based on a target output strategy.

The target output strategy includes any one of the following: (1) a default output strategy, or (2) an output strategy corresponding to the first emotion information.

**In** this embodiment of this application, for the default output strategy, refer to a message output manner in a related technology (for example, the technology in the background). To avoid repetition, details are not described herein again.

Optionally, in this embodiment of this application, the default output strategy may be a default output strategy in the first electronic device, or may be a default output strategy of a server corresponding to an application to which the first message belongs. This may be specifically determined according to an actual use requirement, and is not limited in this embodiment of this application.

Optionally, in this embodiment of this application, the first electronic device may pre-store a correspondence between emotion information and an output strategy, or the first electronic device may obtain a correspondence between emotion information and an output strategy from a corresponding server. In this way, after obtaining the first emotion information, the first electronic device may determine, based on the correspondence, the output strategy corresponding to the first emotion information.

Optionally, in this embodiment of this application, forms (a voice form, a text form, a video form, and an image form) in which the first electronic device outputs a message are different, and output strategies corresponding to emotion information are different. That is, the output strategy corresponding to the first emotion information is determined based on the form in which the first electronic device outputs the message.

Optionally, in this embodiment of this application, for the voice form, different emotion information corresponds to different tones. For the text form, different emotion information corresponds to at least one of different text colors, different text sizes, different background patterns, and different fonts. For the video form, different emotion information corresponds to at least one of different tones or different screen display colors. For the image form, different emotion information corresponds to different image display colors. This may be specifically determined according to an actual use requirement, and is not limited in this embodiment of this application.

For example, when a message is output in a voice form, an output strategy corresponding to emotion information is as follows: A pleasure emotion corresponds to a cheerful tone, and a grief emotion corresponds to a smooth tone; or when a message is output in a text form, an output strategy corresponding to emotion information is as follows: A pleasure emotion corresponds to a red font, and a grief emotion corresponds to a black font; or when a message is output in an image form, an output strategy corresponding to emotion information is as follows: A pleasure emotion corresponds to a relatively rich color, and a grief emotion corresponds to a gray color.

Optionally, in this embodiment of this application, in (2) above, when the at least one piece of first content in the first message is associated with same emotion information, the electronic device may output all first content based on the output strategy corresponding to the first emotion information. When the at least one piece of first content in the first message is associated with a plurality of pieces of emotion information, that is, when at least two pieces of first content are associated with different emotion information, the electronic device may output, based on the output strategy corresponding to the first emotion information, the first content associated with one emotion. This may be specifically determined according to an actual use requirement, and is not limited in this embodiment of this application.

In this embodiment of this application, the first message includes the at least one piece of first content, and each piece of first content is associated with one piece of emotion information. In a case that the emotion information associated with the second content in the at least one piece of first content matches the first emotion information, the first electronic device may output the second content. Alternatively, in a case that the emotion information associated with each piece of first content in the at least one piece of first content does not match the first emotion information, the first electronic device may output at least the part of the content in the at least one piece of first content based on the default output strategy or the output strategy corresponding to the first emotion information. Therefore, flexibility of message output may be improved.

Optionally, in this embodiment of this application, the first message may further include third content that is not associated with emotion information. That is, the first message includes the at least one piece of first content and the third content. The foregoing step 102 may be specifically implemented by using the following step 102c.

Step 102c: In a case that the emotion information associated with each piece of first content in the at least one piece of first content does not match the first emotion information, the first electronic device outputs the third content.

Optionally, in this embodiment of this application, the third content may be the same as or different from the first content. This may be specifically determined according to an actual use requirement, and is not limited in this embodiment of this application.

Optionally, in this embodiment of this application, that the first electronic device outputs the third content may be specifically as follows: The first electronic device outputs the third content in a default output manner of the first electronic device. Alternatively, the first electronic device may output the third content based on the output strategy corresponding to the first emotion information. This may be specifically determined according to an actual use requirement, and is not limited in this embodiment of this application.

For other specific descriptions of step 102c, refer to the related descriptions in the foregoing embodiment. To avoid repetition, details are not described herein again.

In this embodiment of this application, when the first message further includes the third content that is not associated with the emotion information, that is, the first message includes not only the at least one piece of first content that is associated with the emotion information, but also includes the third content that is not associated with the emotion information, in a case that the emotion information associated with the at least one piece of first content does not match the first emotion information, the first electronic device may output the third content. Therefore, the user of the first electronic device may view any content in the first message to improve user experience, and flexibility of message output may be improved.

Optionally, in this embodiment of this application, the foregoing step 102 may be specifically implemented by using the following step 102d.

Step 102d: The first electronic device outputs at least the part of the content in the first message based on the output strategy corresponding to the first emotion information.

Optionally, in this embodiment of this application, all content in the first message may not be associated with the emotion information, so that the first electronic device may output at least the part of the content in the first message based on the output strategy corresponding to the first emotion information.

For other specific descriptions of step 102d, refer to the related descriptions in the foregoing embodiment. To avoid repetition, details are not described herein again.

In this embodiment of this application, the first electronic device may output at least the part of the content in the first message based on the output strategy corresponding to the first emotion information. That is, the first electronic device may output content that matches a current emotion of the user who uses the first electronic device, or may output content in an output form that matches a current emotion of the user who uses the first electronic device. Therefore, flexibility of message output may be improved.

Optionally, in this embodiment of this application, the foregoing step 102d may be specifically implemented by using the following step 102d'.

Step 102d': The first electronic device plays at least the part of the content in the first message based on a tone corresponding to the first emotion information; and/or the first electronic device displays at least the part of the content in the first message based on a display format corresponding to the first emotion information.

Optionally, in this embodiment of this application, the display format may be at least one of the following: a text color, a text size, a background pattern, a display color (of an image or a screen), or a font. This may be specifically determined according to an actual use requirement, and is not limited in this embodiment of this application.

Optionally, in this embodiment of this application, when the first electronic device outputs at least the part of the content in the first message in a voice form, the first electronic device may play at least the part of the content in the first message based on the tone corresponding to the first emotion information. When the first electronic device outputs at least the part of the content in the first message in a text form, the first electronic device may display at least the part of the content in the first message based on the display format corresponding to the first emotion information. This may be specifically determined according to an actual use requirement, and is not limited in this embodiment of this application.

In this embodiment of this application, the first electronic device may play at least the part of the content in the first message based on the tone corresponding to the first emotion information; and/or the first electronic device may display at least the part of the content in the first message based on the display format corresponding to the first emotion information. That is, different message output forms correspond to different output strategies. Therefore, diversity of message output strategies may be improved.

In the message output method provided in this embodiment of this application, after obtaining the first emotion information that is used to indicate the emotion of the user of the first electronic device, the first electronic device may output at least the part of the content in the first message based on the first emotion information, instead of outputting the first message in a default manner. Therefore, flexibility of a message output manner may be improved.

Optionally, in this embodiment of this application, after the foregoing step 102, the message output method provided in this embodiment of this application may further include the following step 103.

Step 103: The first electronic device deletes all content that is not output in the first message.

Optionally, in this embodiment of this application, after the first electronic device outputs at least the part of the content in the first message, the first electronic device obtains the content that is not output in the first message, and deletes the content that is not output.

Optionally, in this embodiment of this application, the first electronic device may permanently delete, from the first electronic device, all the content that is not output in the first message. Alternatively, all the content that is not output in the first message may be deleted from an application to which the first message belongs, and stored in a recycling bin of the first electronic device. When the user of the first electronic device needs to find the deleted content, the first electronic device may be triggered to find the deleted content. This may be specifically determined according to an actual use requirement, and is not limited in this embodiment of this application.

In this embodiment of this application, after outputting the part of the content in the first message, the first electronic device may delete all the content that is not output in the first message, thereby saving storage space.

Optionally, in this embodiment of this application, during actual implementation, the first electronic device may delete only the content that is not output in the first message and that is duplicate with the output content.

Optionally, in this embodiment of this application, after outputting at least the part of the content in the first message, the first electronic device may not delete all the content that is not output in the first message. In addition, when the user of the first electronic device triggers the first electronic device again to output the first message, the first electronic device may output at least the part of the content in the first message based on a current real-time emotion of the user of the first electronic device. That is, when the user of the first electronic device triggers the first electronic device each time to output the first message, at least the part of the content that is in the first message and that is output by the first electronic device may be different. Therefore, flexibility of a message output manner may be improved.

Optionally, in this embodiment of this application, before the foregoing step 102, the message output method provided in this embodiment of this application may further include the following step 104. The foregoing step 102 may be specifically implemented by using the following step 102e.

Step 104: The first electronic device receives a first input performed by the user on a target identifier, where the target identifier indicates the first message.

Optionally, in this embodiment of this application, after displaying the target identifier indicating the first message, and before receiving the first input performed by the user on the target identifier, the first electronic device may first obtain the first emotion information. For example, the first electronic device obtains the first emotion information based on an input performed by the user on a control that is used to obtain emotion information; or the first electronic device may obtain the first emotion information in a process of outputting the target message associated with the first message; or after receiving the first input performed by the user on the target identifier, the first electronic device may obtain the first emotion information. This may be specifically determined according to an actual use requirement, and is not limited in this embodiment of this application.

Optionally, in this embodiment of this application, the first input may be a touch input, a floating input, a preset gesture input, or a voice input. This may be specifically determined according to an actual use requirement, and is not limited in this embodiment of this application.

For example, the first input is a tap input performed by the user on the target identifier.

Step 102e: In response to the first input, the first electronic device outputs at least the part of the content in the first message based on the first emotion information.

In this embodiment of this application, for other specific descriptions of step 102e, refer to the related descriptions in step 102 in the foregoing embodiment. To avoid repetition, details are not described herein again.

In this embodiment of this application, after receiving the input performed by the user on the first message, the first electronic device may output at least the part of the content in the first message based on the first emotion information. That is, the first message may be output according to a requirement of the user. Therefore, flexibility of a message output timing may be improved.

Optionally, in this embodiment of this application, with reference to FIG. 1, as shown in FIG. 2, it is assumed that the first message is a message from the second electronic device, and the second electronic device associates the first message with the target message, before the foregoing step 101, the message output method provided in this embodiment of this application may further include the following steps 105 to 108.

Step 105: In a case that the target message is displayed, the second electronic device receives a target input performed by the user on the target message.

It may be understood that, in this embodiment of this application, the user who performs the input to the second electronic device is a user of the second electronic device, and is specifically a user who uses the second electronic device. For ease of description, "the user of the second electronic device" is referred to as "a second user" below. Meanings of the user of the second electronic device and the second user are the same, and may be interchanged.

In this embodiment of this application, the second electronic device may display the target message in a session interface (referred to as a session interface 1). The session interface may be a session interface of the first user, or may be a session interface of a group that includes the first user and the second user.

Optionally, in this embodiment of this application, the target message may be a sent message, a received message, or a message cached in an input box of the session interface 1. This may be specifically determined according to an actual use requirement, and is not limited in this embodiment of this application.

Optionally, in this embodiment of this application, the target input may be a touch input, a floating input, a preset gesture input, or a voice input. This may be specifically determined according to an actual use requirement, and is not limited in this embodiment of this application.

For example, the target input is a long-press input performed by the user on the target message.

Step 106: In response to the target input, the second electronic device obtains the first message, and associates the first message with the target message.

Optionally, in this embodiment of this application, the first message may be a new message (for example, a text message, a voice message, an image message, or a video message) input/recorded based on the target input of the user; or may be a message (for example, a copied and pasted original message) already stored in the second electronic device. This may be specifically determined according to an actual use requirement, and is not limited in this embodiment of this application.

Optionally, in this embodiment of this application, for other descriptions of the first message, refer to the related descriptions in the foregoing embodiment. To avoid repetition, details are not described herein again.

Step 107: The second electronic device sends the first message to the first electronic device.

Step 108: The first electronic device receives the first message.

In a case that the first message is associated with the target message, the target message may be used by the first electronic device to output the first message based on the first emotion information, where the first emotion information may be emotion information obtained when the first electronic device outputs the target message, and the first emotion information may indicate the emotion of the user of the first electronic device.

In this embodiment of this application, when the target message is the message cached in the input box, the second electronic device may first send the target message to the first electronic device, and then send the first message to the first electronic device.

In the message output method provided in this embodiment of this application, the user may input the target message displayed by the second electronic device, to trigger the second electronic device to obtain the first message, associate the first message with the target message, and finally send the first message to the first electronic device. In a case that the first message is associated with the target message, the target message is used by the first electronic device to output the first message based on the first emotion information, where the first emotion information is the emotion information obtained when the first electronic device outputs the target message, and the first emotion information indicates the emotion of the user of the first electronic device. That is, the first electronic device may output the first message based on the first emotion information. Therefore, flexibility of message output may be improved.

Optionally, in this embodiment of this application, the target input includes a first sub-input and a second sub-input. The foregoing step 106 may be specifically implemented by using the following step 106a and step 106b.

Step 106a: In response to the first sub-input performed by the user on the target message, the second electronic device displays a plurality of controls, where each control corresponds to one piece of emotion information, and each piece of emotion information indicates one emotion.

Optionally, in this embodiment of this application, after receiving the first sub-input, the second electronic device may first display one piece of prompt information. Then, the user may input the prompt information, to trigger the second electronic device to display the plurality of controls. Alternatively, after receiving the first sub-input, the second electronic device may directly display the plurality of controls. This may be specifically determined according to an actual use requirement, and is not limited in this embodiment of this application.

Optionally, in this embodiment of this application, the first sub-input may be a touch input, a floating input, a preset gesture input, or a voice input. This may be specifically determined according to an actual use requirement, and is not limited in this embodiment of this application.

Optionally, in this embodiment of this application, the second electronic device may display some of the plurality of controls in a form of a list, and the user may input the list, to trigger the second electronic device to display a control that is not displayed. Alternatively, the second electronic device may display the plurality of controls at the same time. This may be specifically determined according to an actual use requirement, and is not limited in this embodiment of this application.

For example, the plurality of controls include a smile expression control and an angry expression control. An emotion indicated by emotion information that may correspond to the smile expression control is a pleasure emotion, and an emotion indicated by emotion information that corresponds to the anger expression control is an anger emotion.

Step 106b: In response to the second sub-input of at least one first control in the plurality of controls, the second electronic device obtains the at least one piece of first content, associates each piece of first content with emotion information corresponding to one first control, and combines all obtained first content into the first message.

Optionally, in this embodiment of this application, the second sub-input may be a touch input, a floating input, a preset gesture input, or a voice input. This may be specifically determined according to an actual use requirement, and is not limited in this embodiment of this application.

Optionally, in this embodiment of this application, the second sub-input may include at least one input, and each input may obtain one piece of first content.

Optionally, in this embodiment of this application, after selecting one first control, the second user may input one piece of first content based on an input strategy associated with emotion information corresponding to the first control.

Specifically, for example, the second user inputs the first content of a voice type, and the second user may input one piece of first content based on a tone associated with the emotion information corresponding to the first control. For example, the second user inputs the first content of a text type, and the second user may input one piece of first content based on a display format corresponding to the first control.

For example, when the second user inputs the first content of a voice type, after the user selects the smile expression control, the user may input one piece of first content in a cheerful tone; and after the user selects the anger expression control, the user may input one piece of first content in a smooth tone.

For another example, when the second user inputs the first content of a text type, after the user selects the smile expression control, the user may input one piece of first content in a red font; and after the user selects the anger expression control, the user may input one piece of first content in a black font.

Optionally, in this embodiment of this application, content types of the at least one piece of first content may be the same, and the second electronic device may combine all the first content into one first message. Alternatively, there may be a plurality of types (for example, M types) for the content types of the at least one piece of first content, and the second electronic device may package all the first content into one message. This may be specifically determined according to an actual use requirement, and is not limited in this embodiment of this application.

During actual implementation, when there are a plurality of types (for example, M types) for the content types of the at least one piece of first content, the second electronic device may further combine the at least one piece of first content into a plurality of first messages (for example, the second electronic device combines the at least one piece of first content into M first messages) based on the content types.

In this embodiment of this application, the user may input the target message, to trigger the second electronic device to display the plurality of controls, where each control corresponds to one piece of emotion information, and each piece of emotion information indicates one emotion. In addition, in response to the second sub-input of the user, the second electronic device may obtain the at least one piece of first content, associate each piece of first content with the emotion information corresponding to one first control, and combine all the obtained first content into the first message. Therefore, after receiving the first message, the first electronic device may output at least the part of the content in the first message based on the obtained first emotion information of the user of the first electronic device, thereby improving flexibility of message output.

The message output method provided in the embodiments of this application is illustrated with reference to the accompanying drawings.

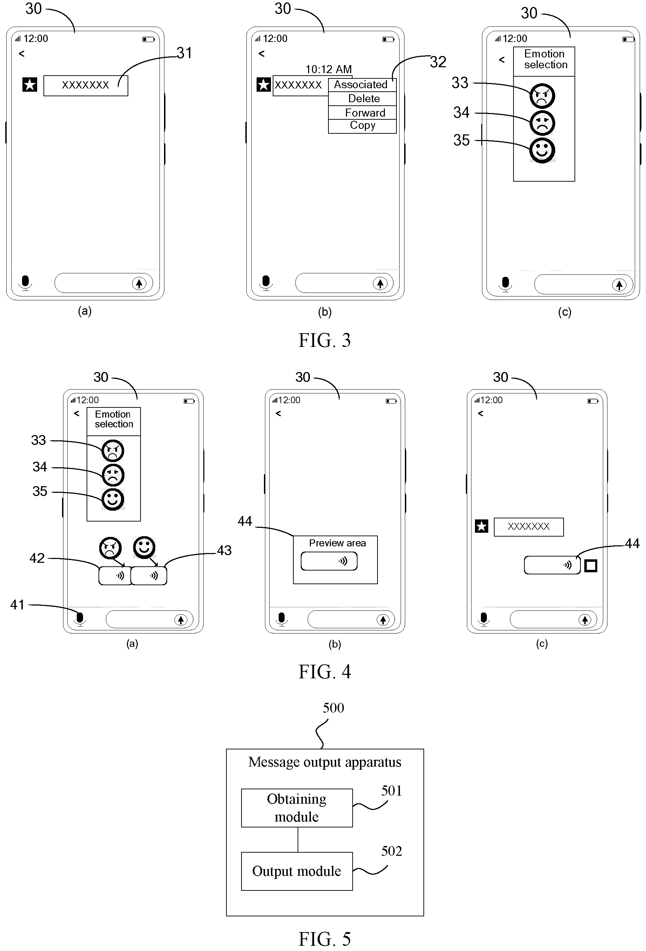

As shown in (a) in FIG. 3, a second electronic device displays a target message 31 "XXXXXXX" in a session interface 30, and a second user may perform a long-press input on the target message 31. As shown in (b) in FIG. 3, the second electronic device displays a plurality of controls (an Associated control 32, a Delete control, a Forward control, and a Copy control). The user may perform a tap input on the Associated control 32 (the long-press input performed by the user on the target message 31 and the tap input performed by the user on the Associated control 32 are the first sub-input in this embodiment). As shown in (c) in FIG. 3, the second electronic device displays a plurality of expression controls (namely, the plurality of controls in this embodiment). An anger expression control 33 corresponds to an anger emotion, a grief expression control 34 corresponds to a grief emotion, and a smile expression control 35 corresponds to a pleasure emotion. The user may perform a tap input on the anger expression control 33, perform a long-press input on a voice input control 41, and speak in a smooth tone in a long-press process. As shown in (a) in FIG. 4, the second electronic device may record content spoken by the second user as one piece of first content 42. Then, the user may perform a tap input on the smile expression control 35, perform a long-press input on the voice input control 41, and speak in a cheerful tone in a long-press process. As shown in (a) in FIG. 4, the second electronic device may record content spoken by the second user as one piece of first content 43. After the content input is completed, as shown in (b) in FIG. 4, the second electronic device may combine the first content 42 and the first content 43 into a first message 44. That is, in response to the second sub-input of at least one first control in the plurality of controls, the second electronic device obtains at least one piece of first content, associates each piece of first content with emotion information corresponding to one first control, and combines all obtained first content into the first message. Then, the second electronic device may send the first message to a first electronic device. In this way, as shown in (c) in FIG. 4, the second electronic device may display the first message 44 in the session interface 30.

It should be noted that the message output method provided in this embodiment of this application may be performed by a message output apparatus or a control module that is in the message output apparatus and that is configured to perform the message output method. In the embodiments of this application, an example in which the message output apparatus performs the message output method is used to describe the message output apparatus provided in the embodiments of this application.

With reference to FIG. 5, an embodiment of this application provides a message output apparatus 500. The message output apparatus 500 may include an obtaining module 501 and an output module 502. The obtaining module 501 is configured to obtain first emotion information, where the first emotion information indicates an emotion of a user of a first electronic device; and the output module 502 is configured to output at least a part of content in a first message based on the first emotion information obtained by the obtaining module 501.

Optionally, in this embodiment of this application, the first message includes at least one piece of first content, each piece of first content is associated with one piece of emotion information, and the one piece of emotion information indicates one emotion. The output module 502 is specifically configured to: in a case that emotion information associated with second content in the at least one piece of first content matches the first emotion information, output the second content; or is specifically configured to: in a case that emotion information associated with each piece of first content in the at least one piece of first content does not match the first emotion information, output at least a part of content in the at least one piece of first content based on a target output strategy. The target output strategy includes any one of the following: a default output strategy, or an output strategy corresponding to the first emotion information.

Optionally, in this embodiment of this application, the first message further includes third content that is not associated with emotion information. The output module 502 is further configured to: in a case that the emotion information associated with each piece of first content in the at least one piece of first content does not match the first emotion information, output the third content.

Optionally, in this embodiment of this application, the output module 502 is specifically configured to output at least the part of the content in the first message based on an output strategy corresponding to the first emotion information.

Optionally, in this embodiment of this application, the output module 502 is specifically configured to: play at least the part of the content in the first message based on a tone corresponding to the first emotion information; and/or display at least the part of the content in the first message based on a display format corresponding to the first emotion information.

Optionally, in this embodiment of this application, the message output apparatus 500 further includes a receiving module. The receiving module is configured to: before the output module 502 outputs at least the part of the content in the first message based on the first emotion information, receive a first input performed by a user on a target identifier, where the target identifier indicates the first message. The output module 502 is specifically configured to: in response to the first input received by the receiving module, output at least the part of the content in the first message based on the first emotion information.

Optionally, in this embodiment of this application, the obtaining module 501 is specifically configured to: in a process of outputting a target message, obtain the first emotion information, where the target message is associated with the first message.

Optionally, in this embodiment of this application, the message output apparatus 500 further includes a processing module. The processing module is configured to: after the output module outputs at least the part of the content in the first message based on the first emotion information, delete all content that is not output in the first message.

In the message output apparatus provided in this embodiment of this application, after obtaining the first emotion information that is used to indicate the emotion of the user of the first electronic device, the message output apparatus may output at least the part of the content in the first message based on the first emotion information, instead of outputting the first message in a default manner. Therefore, flexibility of a message output manner may be improved.

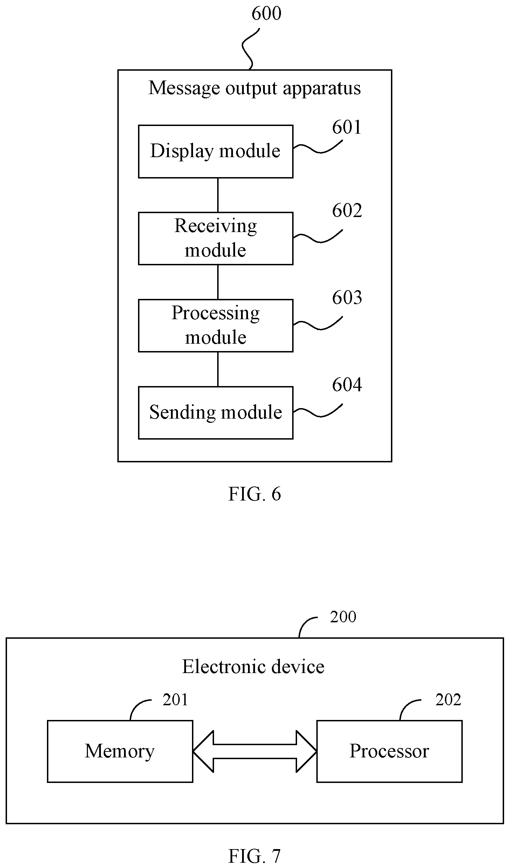

With reference to FIG. 6, an embodiment of this application provides a message output apparatus 600. The message output apparatus may include a display module 601, a receiving module 602, a processing module 603, and a sending module 604. The receiving module 602 is configured to: in a case that the display module 601 displays a target message, receive a target input performed by a user on the target message; the processing module 603 is configured to: in response to the target input received by the receiving module 602, obtain a first message, and associate the first message with the target message; and the sending module 604 is configured to send the first message to a first electronic device. In a case that the first message is associated with the target message, the target message is used by the first electronic device to output the first message based on first emotion information, where the first emotion information is emotion information obtained when the first electronic device outputs the target message, and the first emotion information indicates an emotion of a user of the first electronic device.

Optionally, in this embodiment of this application, the target input includes a first sub-input and a second sub-input. The processing module 603 is specifically configured to: in response to the first sub-input performed on the target message, display a plurality of controls, where each control corresponds to one piece of emotion information, and each piece of emotion information indicates one emotion; and in response to the second sub-input of at least one first control in the plurality of controls, obtain at least one piece of first content, associate each piece of first content with emotion information corresponding to one first control, and combine all obtained first content into the first message.

In the message output apparatus provided in this embodiment of this application, the user may input the target message displayed by a second electronic device, to trigger the second electronic device to obtain the first message, associate the first message with the target message, and finally send the first message to the first electronic device. In a case that the first message is associated with the target message, the target message is used by the first electronic device to output the first message based on the first emotion information, where the first emotion information is the emotion information obtained when the first electronic device outputs the target message, and the first emotion information indicates the emotion of the user of the first electronic device. That is, the first electronic device may output the first message based on the first emotion information. Therefore, flexibility of message output may be improved.

For beneficial effects of the implementations in this embodiment, refer to the beneficial effects of the corresponding implementations in the foregoing method embodiment. To avoid repetition, details are not described herein again.

The message output apparatus in this embodiment of this application may be an electronic device, or may be a component such as an integrated circuit or a chip in the electronic device. The electronic device may be a terminal, or may be another device other than the terminal. For example, the electronic device may be a mobile phone, a tablet computer, a notebook computer, a palmtop computer, a vehicle-mounted electronic device, a mobile Internet device (Mobile Internet Device, MID), an augmented reality (augmented reality, AR)/virtual reality (virtual reality, VR) device, a robot, a wearable device, an ultra-mobile personal computer (ultra-mobile personal computer, UMPC), a netbook, a personal digital assistant (personal digital assistant, PDA), or the like; or may be a server, a network attached storage (Network Attached Storage, NAS), a personal computer (personal computer, PC), a television (television, TV), a teller machine, a self-service machine, or the like. This is not specifically limited in this embodiment of this application.

The message output apparatus in this embodiment of this application may be an apparatus having an operating system. The operating system may be an Android (Android) operating system, may be an iOS operating system, or may be another possible operating system. This is not specifically limited in this embodiment of this application.

The message output apparatus provided in this embodiment of this application can implement the processes implemented in the method embodiment in FIG. 1 or FIG. 2. To avoid repetition, details are not described herein again.

As shown in FIG. 7, an embodiment of this application further provides an electronic device 200, including a processor 202, a memory 201, and a program or an instruction that is stored in the memory 201 and that is executable on the processor 202. When the program or the instruction is executed by the processor 202, the processes of the foregoing embodiment of the message output method are implemented and a same technical effect can be achieved. To avoid repetition, details are not described herein again.

It should be noted that the electronic device in this embodiment of this application includes the foregoing mobile electronic device and the foregoing non-mobile electronic device.

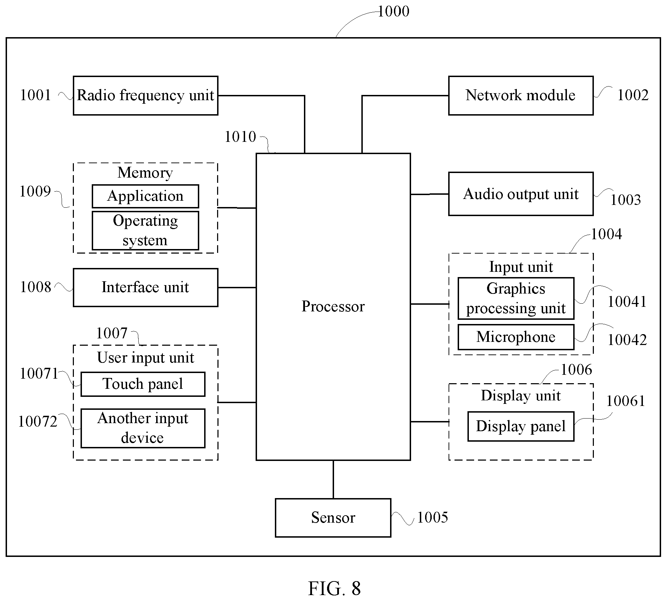

FIG. 8 is a schematic diagram of a hardware structure of an electronic device according to an embodiment of this application.

The electronic device 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the electronic device 1000 may further include a power supply (such as a battery) that supplies power to each component. The power supply may be logically connected to the processor 1010 by using a power supply management system, to implement functions such as charging and discharging management, and power consumption management by using the power supply management system. The structure of the electronic device shown in FIG. 8 does not constitute a limitation on the electronic device. The electronic device may include components more or fewer than those shown in the diagram, a combination of some components, or different component arrangements. Details are not described herein.

**In** a case that the electronic device 1000 is the first electronic device described in the embodiment:

The processor 1010 is configured to obtain first emotion information, where the first emotion information indicates an emotion of a user of the first electronic device; and the processor 1010 is configured to output at least a part of content in a first message based on the obtained first emotion information.

Optionally, in this embodiment of this application, the first message includes at least one piece of first content, each piece of first content is associated with one piece of emotion information, and the one piece of emotion information indicates one emotion. The processor 1010 is specifically configured to: in a case that emotion information associated with second content in the at least one piece of first content matches the first emotion information, output the second content; or is specifically configured to: in a case that emotion information associated with each piece of first content in the at least one piece of first content does not match the first emotion information, output at least a part of content in the at least one piece of first content based on a target output strategy. The target output strategy includes any one of the following: a default output strategy, or an output strategy corresponding to the first emotion information.

Optionally, in this embodiment of this application, the first message further includes third content that is not associated with emotion information. The processor 1010 is further configured to: in a case that the emotion information associated with each piece of first content in the at least one piece of first content does not match the first emotion information, output the third content.

Optionally, in this embodiment of this application, the processor 1010 is specifically configured to output at least the part of the content in the first message based on an output strategy corresponding to the first emotion information.

Optionally, in this embodiment of this application, the processor 1010 is specifically configured to: play at least the part of the content in the first message based on a tone corresponding to the first emotion information; and/or display at least the part of the content in the first message based on a display format corresponding to the first emotion information.

Optionally, in this embodiment of this application, the user input unit 1007 is configured to: before the processor 1010 outputs at least the part of the content in the first message based on the first emotion information, receive a first input performed by a user on a target identifier, where the target identifier indicates the first message. The processor 1010 is specifically configured to: in response to the first input received by the user input unit 1007, output at least the part of the content in the first message based on the first emotion information.

Optionally, in this embodiment of this application, the processor 1010 is specifically configured to: in a process of outputting a target message, obtain the first emotion information, where the target message is associated with the first message.

Optionally, in this embodiment of this application, the processor 1010 is further configured to: after the processor 1010 outputs at least the part of the content in the first message based on the first emotion information, delete all content that is not output in the first message.

In the electronic device provided in this embodiment of this application, after obtaining the first emotion information that is used to indicate the emotion of the user of the first electronic device, the electronic device may output at least the part of the content in the first message based on the first emotion information, instead of outputting the first message in a default manner. Therefore, flexibility of a message output manner may be improved.

In a case that the electronic device 1000 is the second electronic device described in the embodiment:

The user input unit 1007 is configured to: in a case that the display unit 1006 displays a target message, receive a target input performed by a user on the target message; the processor 1010 is configured to: in response to the target input received by the user input unit 1007, obtain a first message, and associate the first message with the target message; and the processor 1010 is configured to send the first message to a first electronic device. In a case that the first message is associated with the target message, the target message is used by the first electronic device to output the first message based on first emotion information, where the first emotion information is emotion information obtained when the first electronic device outputs the target message, and the first emotion information indicates an emotion of a user of the first electronic device.

Optionally, in this embodiment of this application, the target input includes a first sub-input and a second sub-input. The processor 1010 is specifically configured to: in response to the first sub-input performed on the target message, display a plurality of controls, where each control corresponds to one piece of emotion information, and each piece of emotion information indicates one emotion; and in response to the second sub-input of at least one first control in the plurality of controls, obtain at least one piece of first content, associate each piece of first content with emotion information corresponding to one first control, and combine all obtained first content into the first message.

In the electronic device provided in this embodiment of this application, the user may input the target message displayed by the second electronic device, to trigger the second electronic device to obtain the first message, associate the first message with the target message, and finally send the first message to the first electronic device. In a case that the first message is associated with the target message, the target message is used by the first electronic device to output the first message based on the first emotion information, where the first emotion information is the emotion information obtained when the first electronic device outputs the target message, and the first emotion information indicates the emotion of the user of the first electronic device. That is, the first electronic device may output the first message based on the first emotion information. Therefore, flexibility of message output may be improved.

For beneficial effects of the implementations in this embodiment, refer to the beneficial effects of the corresponding implementations in the foregoing method embodiment. To avoid repetition, details are not described herein again.

It should be understood that, in this embodiment of this application, the input unit 1004 may include a graphics processing unit (Graphics Processing Unit, GPU) 10041 and a microphone 10042. The graphics processing unit 10041 processes image data of a static image or a video obtained by an image capture apparatus (for example, a camera) in a video capture mode or an image capture mode. The display unit 1006 may include a display panel 10061, and the display panel 10061 may be configured in a form of a liquid crystal display, an organic light-emitting diode, or the like. The user input unit 1007 includes at least one of a touch panel 10071 and another input device 10072. The touch panel 10071 is also referred to as a touchscreen. The touch panel 10071 may include two parts: a touch detection apparatus and a touch controller. The another input device 10072 may include but be not limited to a physical keyboard, a functional button (such as a volume control button or a power on/off button), a trackball, a mouse, and a joystick. Details are not described herein.

The memory 1009 may be configured to store a software program and various data. The memory 1009 may mainly include a first storage area for storing a program or an instruction and a second storage area for storing data. The first storage area may store an operating system, and an application or an instruction required by at least one function (for example, a sound playing function or an image playing function). In addition, the memory 1009 may be a volatile memory or a non-volatile memory, or the memory 1009 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DRRAM). The memory 1009 in this embodiment of this application includes but is not limited to these memories and any memory of another proper type.

The processor 1010 may include one or more processing units. Optionally, an application processor and a modem processor are integrated into the processor 1010. The application processor mainly processes an operating system, a user interface, an application, or the like. The modem processor mainly processes a wireless communication signal, for example, a baseband processor. It may be understood that, alternatively, the modem processor may not be integrated into the processor 1010.

An embodiment of this application further provides a readable storage medium. The readable storage medium stores a program or an instruction. When the program or the instruction is executed by a processor, the processes of the foregoing embodiment of the message output method are implemented, and a same technical effect can be achieved. To avoid repetition, details are not described herein again.

The processor is the processor in the electronic device in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or an instruction, to implement the processes of the foregoing embodiment of the message output method, and a same technical effect can be achieved. To avoid repetition, details are not described herein again.

It should be understood that the chip mentioned in this embodiment of this application may also be referred to as a system-level chip, a system chip, a chip system, an on-chip system chip, or the like.

An embodiment of this application further provides a computer program product. The program product is stored in a storage medium, and the program product is executed by at least one processor to implement the processes of the foregoing embodiment of the message output method, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A message output method, applied to a first electronic device, wherein the method comprises:
obtaining first emotion information, wherein the first emotion information indicates an emotion of a user of the first electronic device; and
outputting at least a part of content in a first message based on the first emotion information.

2. The method according to claim 1, wherein the first message comprises at least one piece of first content, each piece of first content is associated with one piece of emotion information, and the one piece of emotion information indicates one emotion; and
the outputting at least a part of content in a first message based on the first emotion information comprises:
in a case that emotion information associated with second content in the at least one piece of first content matches the first emotion information, outputting the second content; or
in a case that emotion information associated with each piece of first content in the at least one piece of first content does not match the first emotion information, outputting at least a part of content in the at least one piece of first content based on a target output strategy, wherein
the target output strategy comprises any one of the following: a default output strategy, or an output strategy corresponding to the first emotion information.

3. The method according to claim 2, wherein the first message further comprises third content that is not associated with emotion information; and
the outputting at least a part of content in a first message based on the first emotion information comprises:
in a case that the emotion information associated with each piece of first content in the at least one piece of first content does not match the first emotion information, outputting the third content.

4. The method according to claim 1, wherein the outputting at least a part of content in a first message based on the first emotion information comprises:
outputting at least the part of the content in the first message based on an output strategy corresponding to the first emotion information.

5. The method according to claim 4, wherein the outputting at least the part of the content in the first message based on the output strategy corresponding to the first emotion information comprises:
playing at least the part of the content in the first message based on a tone corresponding to the first emotion information; and/or
displaying at least the part of the content in the first message based on a display format corresponding to the first emotion information.

6. The method according to claim 1, wherein before the outputting at least a part of content in a first message based on the first emotion information, the method further comprises:
receiving a first input performed by a user on a target identifier, wherein the target identifier indicates the first message; and
the outputting at least a part of content in a first message based on the first emotion information comprises:
in response to the first input, outputting at least the part of the content in the first message based on the first emotion information.

7. The method according to claim 1, the obtaining first emotion information comprises:
in a process of outputting a target message, obtaining the first emotion information, wherein
the target message is associated with the first message.

8. The method according to claim 1, wherein after the outputting at least a part of content in a first message based on the first emotion information, the method further comprises:
deleting all content that is not output in the first message.

9. A message output method, applied to a second electronic device, wherein the method comprises:
in a case that a target message is displayed, receiving a target input performed by a user on the target message;
in response to the target input, obtaining a first message, and associating the first message with the target message; and
sending the first message to a first electronic device, wherein
in a case that the first message is associated with the target message, the target message is used by the first electronic device to output the first message based on first emotion information, wherein the first emotion information is emotion information obtained when the first electronic device outputs the target message, and the first emotion information indicates an emotion of a user of the first electronic device.

10. The method according to claim 9, wherein the target input comprises a first sub-input and a second sub-input; and
the in response to the target input, obtaining a first message, and associating the first message with the target message comprises:
in response to the first sub-input performed on the target message, displaying a plurality of controls, wherein each control corresponds to one piece of emotion information, and each piece of emotion information indicates one emotion; and
in response to the second sub-input of at least one first control in the plurality of controls, obtaining at least one piece of first content, associating each piece of first content with emotion information corresponding to one first control, and combining all obtained first content into the first message.

11. A message output apparatus, wherein the apparatus comprises an obtaining module and an output module, wherein
the obtaining module is configured to obtain first emotion information, wherein the first emotion information indicates an emotion of a user of a first electronic device; and
the output module is configured to output at least a part of content in a first message based on the first emotion information obtained by the obtaining module.

12. A message output apparatus, wherein the apparatus comprises a display module, a receiving module, a processing module, and a sending module, wherein
the receiving module is configured to: in a case that the display module displays a target message, receive a target input performed by a user on the target message;
the processing module is configured to: in response to the target input received by the receiving module, obtain a first message, and associate the first message with the target message; and
the sending module is configured to send the first message to a first electronic device, wherein
in a case that the first message is associated with the target message, the target message is used by the first electronic device to output the first message based on first emotion information, wherein the first emotion information is emotion information obtained when the first electronic device outputs the target message, and the first emotion information indicates an emotion of a user of the first electronic device.

13. An electronic device, comprising a processor, a memory, and a program or an instruction that is stored in the memory and that is executable on the processor, wherein when the program or the instruction is executed by the processor, the steps of the message output method according to any one of claims 1 to 8 are implemented, or the steps of the message output method according to claim 9 or 10 are implemented.

14. A readable storage medium, wherein the readable storage medium stores a program or an instruction, and when the program or the instruction is executed by a processor, the steps of the message output method according to any one of claims 1 to 8 are implemented, or the steps of the message output method according to claim 9 or 10 are implemented.

15. A computer software product, wherein the computer software product is executed by at least one processor to implement the message output method according to any one of claims 1 to 8, or the message output method according to claim 9 or 10.

16. An electronic device, wherein the electronic device is configured to perform the message output method according to any one of claims 1 to 8, or implement the message output method according to claim 9 or 10.

17. A chip, wherein the chip comprises a processor and a communication interface, the communication interface is coupled to the processor, and the processor is configured to run a program or an instruction, to implement the message output method according to any one of claims 1 to 8, or implement the message output method according to claim 9 or 10.
